# EUROPÄISCHE PATENTANMELDUNG

(11) **EP 2 385 433 A2**
(43) Veröffentlichungstag der Anmeldung: **09.11.2011**
(21) Anmeldenummer: 11004483.1
(22) Anmeldetag: 01.11.2007
(51) Int. Cl.: G05B 19/418, G05B 19/042, G05B 19/048, G05B 19/05, H04L 12/06, H04L 12/403, H04L 1/14

(54) **Verfahren und System zur sicheren Datenübertragung**

(30) Priorität: 15.11.2006 DE 102006054124
(62) Teilanmeldung aus: 07021351.7
(71) Anmelder: Phoenix Contact GmbH & Co. KG, 32825 Blomberg (DE)
(72) Erfinder: Kalhoff, Johannes, 32825 Blomberg (DE); Meyer-Gräfe, Karsten, 33161 Hövelhof (DE)
(74) Vertreter: Bill, Burkart Hartmut

(57) **Zusammenfassung**

Die Erfindung erreicht durch Bereitstellung zusammenwirkender, verteilt in Kommunikationsteilnehmern (21, 22) angeordnete Auswerteeinheiten (212, 222) zur Auswertung sicherheitsgerichteter Daten auf einfache und kostengünstige Weise eine sichere Datenübertragung in einem Kommunikationssystem (1), welches zur Steuerung sicherheitsrelevanter Prozesse eingesetzt wird.

Dementsprechend sieht die Erfindung ein Verfahren vor bei dem eine Datennachricht von einem ersten Teilnehmer (21) über ein zur seriellen Datenübertragung ausgebildetes Kommunikationssystem (1) zu einem zweiten Teilnehmer übertragen wird und die Datennachricht durch eine zweite, in dem zweiten Teilnehmer (22) angeordnete Auswerteeinheit (222) überprüft wird. In Abhängigkeit des Ergebnisses der Überprüfung der Datennachricht wird von dem zweiten Teilnehmer (22) zu dem ersten Teilnehmer (21) eine Quittungsnachricht übertragen, welche wiederum von der ersten, in dem ersten Teilnehmer (21) angeordneten Auswerteeinheit (212) überprüft wird.

Ferner sieht die Erfindung ein System zur Durchführung des Verfahrens vor.

## Beschreibung

Die Erfindung betrifft allgemein die Sicherheitstechnik von Automatisierungssystemen, und insbesondere ein Verfahren und ein System zur sicheren Datenübertragung zwischen Teilnehmern eines zur Steuerung einer Maschine oder Anlage eingesetzten Kommunikationssystems.

Sicherheitstechnik wird bei automatisierten Prozessen in den verschiedensten industriellen Bereichen eingesetzt, um Mitarbeiter vor Verletzungen zu schützen und die Funktionsfähigkeit von Maschinen und Anlagen zu bewahren. In sicherheitstechnischen Applikationen wird der komplette Signalweg einer Sicherheitsfunktion betrachtet. Dieser besteht aus den sicheren Geräten, wie beispielsweise Steuereinheiten, Sensoren oder Aktoren, und deren Verbindungen untereinander. Diese Verbindungen werden größtenteils in paralleler Verdrahtung ausgelegt. Parallel verkabelte Strecken erfordern jedoch einen hohen Aufwand zur Fehleraufdeckung der sicheren Verkabelung. Dies geschieht durch Diagnosefunktionen der sicheren Geräte, um zum Beispiel Quer- oder Kurzschlüsse oder offene Verbindungen zu erkennen. Je nach Sicherheitsanforderung werden diese Systeme redundant oder zum Teil auch diversitär ausgelegt, um die Möglichkeit der auftretenden Fehler zu beherrschen beziehungsweise aufzudecken. Diese Vorgehensweise ist in der Planung und für einige Applikationsbereiche unpraktikabel und darüber hinaus ist die Ausführung häufig aufwendig und kostenintensiv.

Ein bedeutender Kostenpunkt innerhalb der Planungs-, Verkabelungs- und Gerätekosten sind die Transformationskosten für die Signalanpassung zwischen Logik-Signal und Peripherie-Signal, die durch Übergabestellen zwischen den Ein- oder Ausgangskomponenten und der Steuerung anfallen.

In moderneren Systemen lösen sichere Netzwerke große Teile dieser Strecken durch serielle Verbindungen ab, da hierdurch der Signalweg zwischen Ein- bzw. Ausgangskomponente und Steuerung vereinfacht wird. Jedoch ist die serielle Vernetzung mit den aktuellen Netzwerklösungen sehr kostenintensiv und wird derzeit nur für hochwertige Endgeräte genutzt. Grund hierfür ist das derzeit unterschiedliche Wirkprinzip der Verkabelungsüberwachung, der Redundanz in der Verkabelung und der Einfachheit der Sensoren, wie beispielsweise eines rein mechanischen Öffners. Eine Kombination von Endgeräten mit Netzwerkanschluss und paralleler Verdrahtung ist in diesem Zusammenhang nicht möglich. Ein netzwerkfähiger Sensor beispielsweise ist somit nicht einfach gegen einen verkabelten Sensor austauschbar.

An die Übertragung und Verarbeitung sicherheitsgerichteter Daten in einem zur Steuerung eines Automatisierungssystems eingesetzten seriellen Kommunikationssystem sind besondere Anforderungen geknüpft. Sicherheitsgerichtete Daten bezeichnen in diesem Zusammenhang solche Daten, die zur Steuerung sicherheitsrelevanter Prozesse einer Maschine oder Anlage dienen, wobei jeder Prozess sicherheitsrelevant ist, von dem bei Auftreten eines Fehlers eine nicht zu vernachlässigende Gefahr für Menschen und/oder materielle Güter ausgeht.

Ein Ansatz für diese Problematik nach dem Stand der Technik besteht darin, insbesondere die sicherheitsrelevanten Komponenten des Systems ab einem bestimmten Sicherheitslevel mehrkanalig, d.h. redundant aufzubauen. Beispielsweise kann in einem Automatisierungsbussystem vorgesehen sein, Sicherheitsbuskomponenten, d.h. zum Beispiel Busteilnehmer, die einer sicherheitsrelevanten Maschine zugeordnet sind, mit redundanten Hardwarekomponenten auszurüsten. Gleichzeitig kann auch die zentrale Steuerung und der Bus mehrkanalig aufgebaut sein oder gar eine von der Prozeßsteuerung getrennte spezielle und unter Umständen redundant aufgebaute Sicherheitssteuerung zur Steuerung der sicherheitsrelevanten Komponenten vorgesehen sein. Der Bus ist typischerweise mit einem sicheren Protokoll versehen, wobei auch das sichere Protokoll selbst eine Redundanz aufweisen kann. Die Sicherheitssteuerung führt im wesentlichen die Verknüpfungen der sicherheitsbezogenen Eingangsinformationen durch und übermittelt daraufhin, beispielsweise über einen Automatisierungsbus, sicherheitsbezogene Verknüpfungsdaten an Ausgangskomponenten. Die Ausgangskomponenten ihrerseits bearbeiten die empfangenen Sicherheitsmaßnahmen und geben nach positiver Prüfung diese an die Peripherie aus. Darüber hinaus schalten sie ihre Ausgänge in einen sicheren Zustand, wenn sie einen Fehler feststellen oder innerhalb einer vorgegebenen Zeitdauer keine gültigen Daten mehr empfangen haben. Ein Steuerungssystem zum Steuern von sicherheitskritischen Prozessen, bei dem die sicherheitsbezogenen Einrichtungen eine mehrkanalige Struktur aufweisen, ist beispielsweise aus EP 1 188 096 B1 bekannt.

Ferner ist bekannt, speziell ausgebildete, sichere Kommunikationsteilnehmer bereitzustellen, bei denen eine Erhöhung der Sicherheit durch eine redundante Auswertelogik in Kombination mit einem Fail-Safe-Vergleicher erreicht wird. Derartige sichere Busteilnehmer werden beispielsweise bei auf INTERBUS-Safety basierenden Systemen eingesetzt.

Bei den beschriebenen Systemen führt jedoch die redundante Bereitstellung von Hardwarekomponenten nachteilig zu erhöhtem Aufwand und zu erhöhten Kosten.

Aufgabe der Erfindung ist es daher, einen Weg aufzuzeigen, wie in einem Kommunikationssystem eine sichere Datenübertragung auf einfache und kostengünstige Weise bereitgestellt werden kann, insbesondere unter Einsatz von Standardkomponenten und unter Einbindung von einfachen, insbesondere mechanischen Sensoren oder Aktuatoren.

Weitere Aufgabe der Erfindung ist es, ein sicherheitsbezogenes Kommunikationssystem bereitzustellen, welches mit geringen Hardware-Kosten auskommt und flexibel an die jeweiligen Anfordernisse angepaßt werden kann.

Die Erfindung löst dieses Problem mit einem Verfahren mit den Merkmalen des Anspruchs 1 sowie einem zum Ausführen eines solchen Verfahrens ausgebildeten System nach Anspruch 7. Weiterbildungen der Erfindung sind in den Unteransprüchen angegeben.

Dementsprechend sieht ein erfindungsgemäßes Verfahren zur sicheren Datenübertragung zwischen wenigstens einem ersten und einem zweiten Teilnehmer eines Kommunikationssystems, das zur seriellen Datenübertragung zwischen den Teilnehmern ausgebildet ist, zunächst das Übertragen einer Datennachricht von dem ersten Teilnehmer zu dem zweiten Teilnehmer vor. Die Datennachricht wird durch eine zweite, in dem zweiten Teilnehmer angeordnete Auswerteeinheit überprüft. In Abhängigkeit des Ergebnisses der Überprüfung der Datennachricht durch die zweite Auswerteeinheit generiert diese eine Quittungsnachricht, die vom zweiten Teilnehmer zum ersten Teilnehmer übertragen wird. Vorzugsweise wird nur bei erfolgreicher Überprüfung der Datennachricht eine Quittungsnachricht gesendet. Die Quittungsnachricht wird nach Empfang durch die erste, in dem ersten Teilnehmer angeordnete Auswerteeinheit überprüft. Es erfolgt somit eine redundante Überprüfung durch die erste und zweite Auswerteeinheit, wobei der erste und zweite Teilnehmer ein korrespondierendes Teilnehmerpaar bilden.

Das Verfahren wird besonders bevorzugt eingesetzt in der Sensorebene von Systemen zur Steuerung sicherheitsrelevanter automatisierter Prozesse. Dementsprechend ist der erste oder der zweite Teilnehmer besonders vorteilhaft als Sensor oder Aktuator eines Automatisierungssystems ausgebildet. Die Datennachricht umfasst somit vorteilhaft ein Eingangs- oder Ausgangssignal eines Sensors oder Aktuators des Automatisierungssystems.

Vorteilhaft umfasst das Überprüfen der Datennachricht und/oder der Quittungsnachricht durch die erste bzw. zweite Auswerteeinheit ein Überprüfen der in der Nachricht enthaltenen Daten auf Plausibilität. Dementsprechend kann vorzugsweise ein Überprüfen der in der durch den ersten Teilnehmer abzusendenden Datennachricht enthaltenen Daten durch die erste Auswerteeinheit erfolgen, bevor die Datennachricht zu dem zweiten Teilnehmer übertragen wird, wobei nach Empfang der Datennachricht eine weitere Überprüfung der enthaltenen Daten durch die zweite Auswerteeinheit im zweiten Teilnehmer erfolgt. In dieser Ausführungsvariante kann sich das Überprüfen der Quittungsnachricht auf ein Registrieren des Empfangs einer vordefinierten Nachricht beschränken.

In einer weiteren vorteilhaften Ausführungsform generiert der zweite Teilnehmer mittels der zweiten Auswerteeinheit eine Quittungsnachricht, welche die in der empfangenen Datennachricht enthaltenen Daten umfasst. In dieser Ausführungsvariante umfasst das Überprüfen der Quittungsnachricht durch die erste Auswerteeinheit ein Vergleichen von in der Quittungsnachricht enthaltenen Daten mit in der zuvor übertragenen Datennachricht enthaltenen Daten. Zu diesem Zweck werden die vom ersten Teilnehmer in einer Datennachricht übertragenen Daten zumindest bis zum Empfang der entsprechenden Quittungsnachricht zwischengespeichert.

In einer nochmals weiteren vorteilhaften Ausführungsform generiert der zweite Teilnehmer eine Quittungsnachricht, die eine weitere gültige Datennachricht umfasst.

Wird bei Überprüfen der Datennachricht oder der Quittungsnachricht durch eine Auswerteeinheit ein Fehler erkannt, führt der Teilnehmer, dessen Auswerteeinheit den Fehler erkannt hat, vorzugsweise eine sicherheitsgerichtete Funktion aus.

Zur Datenübertragung zwischen den Teilnehmern kann je nach Einsatzzweck vorteilhaft ein kabelgebundener oder drahtloser serieller Bus oder ein kabelgebundenes oder berührungslos wirkendes Netzwerk vorgesehen sein.

Im einfachsten Fall wird ein Punkt-zu-Punkt-Protokoll zwischen dem ersten und zweiten Teilnehmer verwendet, wobei einer der Teilnehmer beispielsweise als Sensor oder Aktuator und der andere als Eingangs- bzw. Ausgangskomponente, im Folgenden auch als E/A-Modul bezeichnet, ausgebildet ist.

Die serielle Datenübertragung zwischen den Teilnehmern des Kommunikationssystems erfolgt vorteilhaft auf der Grundlage eines vorgegebenen Kommunikationsprotokolls. Da das beschriebene Verfahren sowohl in der Standard-Sensorik und -Aktuatorik vorteilhaft eingesetzt werden kann als auch in der Sicherheitstechnik, in der zusätzliche Anforderungen an das verwendete Kommunikationsprotokoll gestellt werden, ist das vorgegebene Kommunikationsprotokoll vorzugsweise wahlweise sicher oder nicht sicher ausgebildet.

Für die Steuerung sicherheitsrelevanter Prozesse wird dementpsrechend vorteilhaft ein vorgegebenes sicheres Kommunikationsprotokoll eingesetzt, bei dem beispielsweise durch redundante Dateninhalte eine Fehlererkennung ermöglicht wird, wobei die Überprüfung der Datennachricht und/oder der Quittungsnachricht durch die erste bzw. zweite Auswerteeinheit eine Fehlerüberprüfung gemäß dem vorgegebenen sicheren Kommunikationsprotokoll umfasst. Das sichere Kommunikationsprotokoll kann zu diesem Zweck beispielsweise ein Prüfsummenverfahren wie die zyklische Redundanzprüfung (CRC; Cyclic Redundancy Check) umfassen. Ein sicheres Kommunikationsprotokoll kann ferner mit Vorteil vorsehen, dass von allen oder einer vorgegebenen Gruppe von Teilnehmern des Kommunikationssystems wiederkehrend, beispielsweise einmal pro Kommunikationszyklus, eine spezifische Nachricht gesendet wird, welche sich zusätzlich nach einem definierten Algorithmus ändern kann.

Die Erfindung beruht somit vorteilhaft auf dem Prinzip einer seriellen sicheren Verbindung zwischen zwei Teilnehmern. Um die nach dem Stand der Technik vorgesehene sichere und redundant ausgebildete Auswerteeinheit je Gerät zu reduzieren, wird in jedem Endpunkt ein Teil der sicheren Auswerteeinheit verlagert. Durch eine Quittierung der Daten wird die Sicherheit redundant zur Verfügung gestellt.

Durch die Verteilung der die Sicherheit gewährleistenden Redundanz auf zwei verteilte Auswerteeinheiten wird besonders vorteilhaft der Einsatz von Standardkomponenten für die Übertragung sicherer Daten ermöglicht.

In einer weiteren Ausführungsform des erfindungsgemäßen Verfahrens ist die zweite Auswerteeinheit zusammen mit der ersten Auswerteeinheit in einer gemeinsamen Baugruppe angeordnet, die in dieser Ausführungsform zweikanalig ausgebildet ist. Auch in dieser Ausführungsform kann vorteilhaft eine zweikanalige Standardkomponente verwendet werden.

Durch die verteilte Redundanz und insbesondere durch den Datenaustausch zwischen der ersten und zweiten Auswerteeinheit wird ferner besonders vorteilhaft ermöglicht, einfache und sogar mechanische Bauelemente, wie beispielsweise als Öffner oder Schließer ausgebildete Standard- oder Sicherheits-Schalter, unter Aufrechterhaltung der Sicherheit mit einzubinden.

Dementsprechend ist in einer weiteren besonders bevorzugten Ausführungsform der Erfindung zwischen die erste und die zweite Auswerteeinheit ein Steuer- oder Sensorelement geschaltet, das selbst keine Auswerteeinheit umfasst und insbesondere als einfacher, vorzugsweise mechanischer Sensor oder Aktuator ausgebildet ist.

Dabei ist vorzugsweise das mechanische Element mit einem Ausgang der ersten Auswerteeinheit und mit einem Eingang der zweiten Auswerteeinheit verbunden, wobei ein Ausgang der zweiten Auswerteeinheit mit einem Eingang der ersten Auswerteeinheit verbunden ist. Eine solche spezielle Verdrahtung ist auf besonders einfache Weise mit einem ersten und zweiten Teilnehmer zu realisieren, welche in einer gemeinsamen Baugruppe angeordnet sind.

Zur Überwachung der verteilten Auswerteeinheiten wird vorzugsweise eine in dem jeweiligen Teilnehmer angeordnete Überwachungsschaltung eingesetzt, die den Datenstrom zu und/oder von der jeweils zugeordneten Auswerteeinheit gemäß einem vorgegebenen Protokoll auf Gültigkeit überwacht und im Fehlerfall die zugeordnete Auswerteeinheit und/oder einen durch die zugeordnete Auswerteeinheit gesteuerten Sensor oder Aktor in einen sicheren Zustand setzt oder einen entsprechenden Ersatzwert nutzt. Über eine fehlende Quittungsnachricht beziehungsweise ein Ausbleiben des gültigen Datenstroms wird die Information über das Auftreten eines Fehlers der Gegenstelle unverzüglich mitgeteilt.

Wie bereits oben erwähnt, kommunizieren die Auswerteeinheiten vorteilhaft über ein sicheres Protokoll miteinander und kontrollieren die versandten Daten inhaltlich. Die an der Auswerteeinheit angeschaltete Überwachungsschaltung prüft den Datenstrom auf Gültigkeit, wobei dies im einfachsten Fall durch eine Mustererkennung erfolgt, ohne die sicheren Inhalte zu kennen. Dementsprechend umfasst das Überwachen des Datenstroms durch die Überwachungsschaltung vorzugsweise das Erkennen wenigstens eines vorgegebenen Musters. Vorteilhaft kann das Überwachen auch eine dynamische Mustererkennung umfassen, beispielsweise durch Vergleichen einfacher Inhalte. Zu diesem Zweck können die übertragenen Datennachrichten mit einem Datum versehen sein, welches sich nach einem vorgegebenen Algorithmus ändert. Die Überwachungsschaltung kann ferner die ihr zugeordnete Auswerteeinheit auf Funktionsfähigkeit überwachen, beispielsweise mittels einer Watchdog-Funktion. Als Watchdog-Funktion wird in diesem Zusammenhang eine Funktion der Überwachungsschaltung bezeichnet, welche den Erhalt regelmäßiger Signale von der zugeordneten Auswerteeinheit überwacht und das Ausbleiben dieser Signale als Fehler erkennt.

Das oben beschriebene Überprüfen einer Daten- oder Quittungsnachricht durch eine Auswerteeinheit, sowie das Überwachen des Datenstroms durch eine Überwachungsschaltung und/oder das Überwachen der Funktionsfähigkeit einer Auswerteeinheit durch eine Überwachungsschaltung umfassen typischerweise das Ausführen einer Funktion, wobei die Funktion vorteilhaft identisch in der ersten und zweiten Auswerteeinheit zur Verfügung steht. Zu diesem Zweck ist vorteilhaft ein Speicher und ein Mikroprozessor vorgesehen, wobei das Ausführen der Funktion das Ausführen eines in dem Speicher gespeicherten Ablaufcodes oder Programms durch den Mikroprozessor umfasst.

Aufgrund der Vielseitigkeit der Sensorik und Aktorik eines Automatisierungssystems und der sich daraus ergebenden Vielzahl unterschiedlicher Funktionen, welche sich nicht beliebig vereinheitlichen lassen, ist es nicht zweckmäßig, in einem als E/A-Modul ausgebildeten Teilnehmer, welcher als ein zu einem Sensor oder Aktuator korrespondierender Teilnehmer eingesetzt wird, die gesamte Vielzahl unterschiedlicher Funktionalitäten standardmäßig vorzusehen.

Vielmehr wird vorteilhaft ein Teil der im Sensor oder Aktuator hinterlegten sicherheitsgerichteten Applikationsfunktion und/oder zum Ausführen der Funktion erforderliche Parameter von dem Sensor oder Aktuator zu dem korrespondierenden Teilnehmer übertragen. Dies erfolgt vorzugsweise innerhalb einer Initialisierungsphase vor Aufnahme der Datenübertragung sicherheitsgerichteter Daten zwischen den Teilnehmern.

Der korrespondierende Teilnehmer, zu dem von einem als Sensor oder Aktuator ausgebildeten Teilnehmer Teile einer sicherheitsgerichteten Applikationsfunktion in Form eines Programms oder Ablaufcodes übertragen werden, weist vorzugsweise einen entsprechenden Interpreter zum Ausführen des Programms oder Ablaufcodes auf.

Durch Laden eines Teils des Applikationsprogramms eines Sensors oder Aktuators, insbesondere desjenigen Teils, welcher zur Erhöhung der Sicherheit redundant zur Verfügung stehen soll, auf die kooperierende Eingangs- bzw. Ausgangskomponente kann diese die Sensor- bzw. Aktuator-Applikation mit bearbeiten. Die hierzu notwendigen Rohdaten wie beispielsweise Sensor-Signale und die zur Weiterverarbeitung benötigten Ergebnisse werden zwischen den Teilnehmern seriell ausgetauscht. Dies ermöglicht besonders vorteilhaft eine kostengünstigere Herstellung des Sensors oder Aktuators, da durch die Mitwirkung des intelligenten Eingangs- bzw. Ausgangsgerätes, das den übertragenen Applikations-Code zum Beispiel mittels eines Interpreters abarbeitet, im Sensor bzw. Aktuator nur eine einkanalige Hardware benötigt wird.

Dementsprechend sieht das Verfahren vorteilhaft vor, dass das Überprüfen einer Datennachricht durch eine Auswerteeinheit, das Überprüfen einer Quittungsnachricht durch eine Auswerteeinheit, das Überwachen des Datenstroms durch eine Überwachungsschaltung und/oder das Überwachen der Funktionsfähigkeit einer Auswerteeinheit durch eine Überwachungsschaltung durch Ausführen einer in dem ausführenden Teilnehmer hinterlegten Funktion erfolgt, wobei vor Ausführen der Funktion Teile der auszuführenden Funktion und/oder Parameter zum Ausführen der Funktion von einem weiteren Teilnehmer zu dem ausführenden Teilnehmer übertragen werden.

Teile eines durch eine Auswerteeinheit auszuführenden Auswerteprogramms können zu dem jeweiligen Teilnehmer wie oben beschrieben von einem anderen Teilnehmer, insbesondere von der Auswerteeinheit eines korrespondierenden Sensors oder Aktuators übertragen werden. Alternativ können die entsprechenden Programmteile auch von einer zentralen Steuereinheit übertragen werden, beispielsweise nach Auslesen der Funktionalität des korrespondierenden Sensors oder Aktuators durch die Steuereinheit. Die Übertragung der Programmteile kann vorteilhaft automatisch erfolgen, sowie gegebenenfalls in Abhängigkeit eine vorgegebenen Projektierung des Automatisierungssystems. Auch kann die Übertragung je nach Einsatzzweck über einen separaten Kommunikationskanal erfolgen.

Wie bereits oben beschrieben, ist der erste oder zweite Teilnehmer vorzugsweise als Sensor oder Aktuator ausgebildet. Zur Kommunikation mit übergeordneten Datenverarbeitungseinheiten ist der jeweils zu dem Sensor oder Aktuator korrespondierende und beispielswiese als E/A-Modul ausgebildete Teilnehmer vorzugsweise an ein weiteres, übergeordnetes Bussystem angeschlossen.

Auch können eine Mehrzahl erster oder zweiter Teilnehmer vorgesehen sein. Beispielsweise können eine Mehrzahl als Sensor oder Aktuator ausgebildete Teilnehmer über einen seriellen anreihbaren Bus mit einem korrespondierenden Teilnehmer verbunden sein. Vorteilhaft kann die serielle Kommunikation zwischen den Teilnehmern nach dem Master/Slave-Prinzip erfolgen, wobei beispielsweise der korrespondierende Teilnehmer den Master und die als Sensor oder Aktuator ausgebildeten Teilnehmer die Slaves bilden.

Der korrespondierende Teilnehmer kann ferner vorteilhaft zusätzlich an einen übergeordneten Bus angeschlossen sein, der beispielsweise als serieller, auf einem Feldbus oder auf Ethernet basiertem Bus ausgebildet ist.

Ein erfindungsgemäßes System zur Übertragung sicherheitsgerichteter Daten zur Steuerung eines Automatisierungssystems, welches insbesondere zur Ausführung eines oben beschriebenen Verfahrens ausgebildet ist, umfasst ein serielles Kommunikationssystem mit wenigstens einem ersten und einem zweiten daran angeschlossenen Teilnehmer, wenigstens eine erste, in dem ersten Teilnehmer angeordnete Auswerteeinheit, und wenigstens eine zweite, in dem zweiten Teilnehmer angeordnete Auswerteeinheit, wobei die zweite Auswerteeinheit zum Überprüfen einer von dem ersten Teilnehmer empfangenen Datennachricht und zum Generieren einer Quittungsnachricht in Abhängigkeit des Ergebnisses der Überprüfung der Datennachricht ausgebildet ist, die erste Auswerteeinheit zum Überprüfen einer von dem zweiten Teilnehmer empfangenen Quittungsnachricht ausgebildet ist und der erste und/oder zweite Teilnehmer dazu ausgebildet sind, im Fehlerfall eine Sicherheitsfunktion auszuführen.

Besonders vorteilhaft weist das Kommunikationssystem zur seriellen Datenübertragung zwischen den Teilnehmern einen kabelgebundenen oder drahtlos wirkenden seriellen Bus auf.

Der erste und/oder zweite Teilnehmer ist vorteilhaft als Sensor oder Aktuator eines Automatisierungssystems ausgebildet. Die Auswerteeinheiten dienen dementsprechend insbesondere zur Auswertung sicherheitsgerichteter Eingangs- und/oder Ausgangs-Daten eines Sensors und/oder Aktors mit Einfluss auf einen sicherheitsrelevanten Prozess eines Automatisierungssystems.

Die erste und zweite Auswerteeinheit bilden somit eine verteilte Redundanz, wobei die Auswerteeinheiten zu diesem Zweck in unterschiedlichen Teilnehmern angeordnet sind.

In einer bevorzugten Ausführungsform bilden der erste und der zweite Teilnehmer ein korrespondierendes Teilnehmerpaar, wobei einer der Teilnehmer als Sensor oder Aktuator und der andere Teilnehmer als korrespondierende Eingangs- bzw. Ausgangskomponente ausgebildet sind. Ferner können die in korrespondierenden Teilnehmern angeordneten ersten und zweiten Auswerteeinheiten vorteilhaft die Funktionalität der jeweils anderen Auswerteeinheit mit umfassen. Es wird somit eine in beide Richtungen wirkende Schnittstelle bereitgestellt, so dass die Teilnehmer als Eingangs- oder Ausgangskomponenten verwendet werden können.

Zur Auswertung von Eingangs- und/oder Ausgangs-Signalen, beispielsweise Sensorsignale oder Steuersignale für Aktuatoren, sind die erste und/oder zweite Auswerteeinheit vorzugsweise zum Überprüfen von in einer Datennachricht oder einer Quittungsnachricht enthaltenen Daten auf Plausibilität ausgebildet. Ferner können die erste und/oder zweite Auswerteeinheit vorteilhaft dazu ausgebildet sein, in einer Datennachricht enthaltene Daten mit Daten zu vergleichen, welche in einer Quittungsnachricht enthalten sind. In einer weiteren vorteilhaften Ausführungsform ist die erste und/oder zweite Auswerteeinheit dazu ausgebildet, eine weitere gültige Datennachricht als Quittungsnachricht zu generieren.

Das System kann ferner vorteilhaft jede der oben im Zusammenhang mit den Verfahren beschriebenen Ausführungsvarianten aufweisen.

Dementsprechend sind die Auswerteeinheiten besonders bevorzugt dazu ausgebildet, Daten unter Verwendung eines sicheren Kommunikationsprotokolls auszutauschen. Für eine möglichst flexible Einsatzfähigkeit können die Auswerteeinheiten vorzugsweise digitale und analoge Werte über das Protokoll darstellen, wobei Laufzeit- und Parameterdaten für sichere und nicht sichere Anwendungen auch gemischt vorkommen können.

Ferner können besonders vorteilhaft einfache, insbesondere mechanische Sensoren oder Aktoren in das System eingebunden werden, die über keine Auswerteeinheit zur Auswertung sicherheitsgerichteter Daten verfügen und die zu diesem Zweck zwischen die erste und die zweite Auswerteeinheit geschaltet werden. Die Möglichkeit, neben netzwerkfähigen Sensoren und Aktuatoren auch mechanische Standardkomponenten einsetzen zu können, vereinfacht die Reparatur bestehender Systeme und ist kompatibel zu derzeitigen Sensoren und Aktuatoren.

Für eine einfache Verdrahtung einer mechanischen Standardkomponente sind der erste und zweite Teilnehmer vorteilhaft in einer gemeinsamen Baugruppe angeordnet.

Zur weiteren Erhöhung der Sicherheit ist vorzugsweise jeder Auswerteeinheit eine Überwachungsschaltung zugeordnet, die dazu ausgebildet ist, den Datenstrom zu und/oder von der zugeordneten Auswerteeinheit gemäß einem vorgegebenen Protokoll auf Gültigkeit zu überwachen und im Fehlerfall die zugeordnete Auswerteeinheit und/oder einen durch die zugeordnete Auswerteeinheit gesteuerten Sensor oder Aktor in einen sicheren Zustand zu setzen.

Die Überwachungsschaltung ist zu diesem Zweck bevorzugt zum Erkennen eines vorgegebenen statischen oder dynamischen Musters ausgebildet und kann ferner eine Watchdog-Funktion zur Überwachung der Funktionsfähigkeit der zugeordneten Auswerteeinheit aufweisen. Im einfachsten Fall reicht eine Überlebensüberwachung der einkanaligen Hardware aus, um den sicheren Prozess zu kontrollieren und im Fehlerfall den Ein- oder Ausgang zur Gewährleistung der Sicherheit mit einem Ersatzwert zu versehen.

Wie bereits oben im Zusammenhang mit dem Verfahren beschrieben, ist das Kommunikationssystem vorteilhaft als Master/Slave-System ausgebildet, wobei der erste oder zweite Teilnehmer den Master bildet. Ferner ist der erste oder zweite Teilnehmer vorzugsweise an ein weiteres, übergeordnetes Kommunikationssystem angeschlossen, um Daten mit einer übergeordneten Datenverarbeitungs- oder Steuereinheit auszutauschen.

Um nicht Funktionalitäten der Auswerteeinheiten für jeden denkbaren Einsatzzweck in jedem Teilnehmer vorhalten zu müssen, sind der erste und/oder zweite Teilnehmer vorteilhaft dazu ausgebildet, Funktionsteile und/oder Parameter von einem weiteren Teilnehmer anzufordern.

Dementsprechend ist vorzugsweise wenigstens ein Teilnehmer dazu ausgebildet, das Überprüfen einer Datennachricht durch eine Auswerteeinheit, das Überprüfen einer Quittungsnachricht durch eine Auswerteeinheit, das Überwachen des Datenstroms durch eine Überwachungsschaltung und/oder das Überwachen der Funktionsfähigkeit einer Auswerteeinheit durch eine Überwachungsschaltung durch Ausführen einer in dem Teilnehmer hinterlegten Funktion durchzuführen, wobei der wenigstens eine Teilnehmer ferner dazu ausgebildet ist, zum Ausführen der Funktion ausführbare Funktionsteile und/oder Parameter von einem weiteren Teilnehmer anzufordern.

Zweckmäßigerweise weist der entsprechende Teilnehmer einen Speicher zum Speichern des Ablaufcodes der auszuführenden Funktion auf, in dem eine Grundfunktionalität des Teilnehmers abgelegt ist und in dem zusätzlich in der Anlaufphase des Systems die nach Bedarf angeforderten oder automatisch erhaltenen Funktionsteile und/oder Parameter abgelegt werden. Zur Ausführung der Funktion weist der Teilnehmer vorteilhaft einen Mikroprozessor auf. Ferner ist zur Erhöhung der Flexibilität vorteilhaft ein Interpreter im Teilnehmer vorgesehen, welcher zur Ausführung der zusätzlichen Funktionsteile eingesetzt wird.

Die zusätzlichen Funktionsteile und/oder Parameter können auch vorteilhaft von einer zentralen Steuereinheit, beispielsweise in Abhängigkeit einer vorgegebenen Projektierung des Automatisierungssystems, zur Verfügung gestellt werden.

Durch die Erfindung wird auf einfache Weise eine sichere Datenkommunikation ermöglicht. Die erfindungsgemäß ausgestatteten Sensoren oder Aktuatoren können kostengünstiger und mit geringerer Varianz erzeugt werden. Dies gilt auch für als Zentral-Baugruppen oder dezentrale Netzwerkteilnehmer ausgebildete E/A-Karten von Automatierungssystemen.

Ferner werden durch die vorliegende Erfindung derzeitige Installationsrichtlinien vereinfacht, wodurch Fehlverhalten und Unwissenheit bezüglich der angeschlossenen Sensoren und Aktuatoren weniger Einfluss auf die Funktion der Sicherheitstechnik hat.

Die Erfindung wird nachfolgend beispielhaft anhand bevorzugter Ausführungsformen und unter Bezugnahme auf die beigefügten Zeichnungen genauer beschrieben. Dabei bezeichnen gleiche Bezugszeichen in den Zeichnungen gleiche oder ähnliche Teile.

Es zeigen:
- Fig. 1a:: eine schematische Darstellung eines beispielhaften Signalwegs eines Eingangssignals hin zu einer Steuereinheit bei paralleler Anbindung,
- Fig. 1b:: eine schematische Darstellung eines beispielhaften Signalwegs eines Eingangssignals hin zu einer Steuereinheit bei serieller Anbindung,
- Fig. 2:: eine schematische Darstellung eines Ausführungsbeispiels mit einem ersten und zweiten Teilnehmer,
- Fig. 3:: eine schematische Darstellung eines Ausführungsbeispiels, bei dem zwischen einen ersten und einen zweiten Teilnehmer ein Not-Aus-Schalter geschaltet ist,
- Fig. 4:: eine schematische Darstellung eines Ausführungsbeispiels, bei dem zwischen einen ersten und einen zweiten Teilnehmer ein Not-Aus-Schalter geschaltet ist, wobei der erste und der zweite Teilnehmer in einer gemeinsamen Baugruppe angeordnet sind,
- Fig. 5: eine schematische Darstellung einer ersten Ausführungsvariante der funktionalen Komponenten
- Fig. 6: des in Fig. 2 dargestellten ersten und zweiten Teilnehmers, eine schematische Darstellung einer zweiten Ausführungsvariante der funktionalen Komponenten des in Fig. 2 dargestellten ersten und zweiten Teilnehmers,
- Fig. 7: eine schematische Darstellung eines Ausführungsbeispiels, bei dem die serielle Kommunikation zwischen dem ersten und zweiten Teilnehmer drahtlos erfolgt, und
- Fig. 8: eine schematische Darstellung eines Ausführungsbeispiels, bei dem der erste und zweite Teilnehmer ein Lichtgitter bilden.

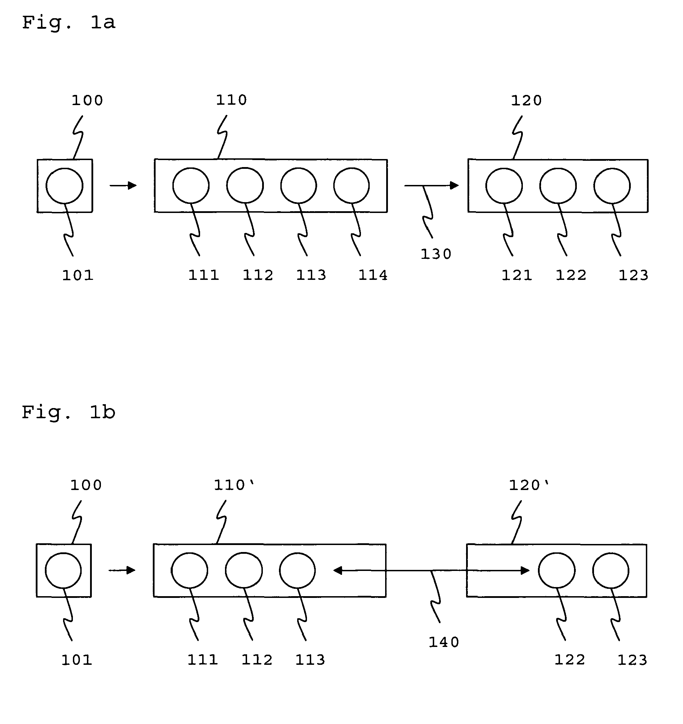

Die Figuren 1a und 1b zeigen für eine sicherheitstechnische Applikation beispielhaft den Signalweg eines Eingangssignals von einem Sensor hin zu einem als Eingangskomponente ausgebildeten E/A-Modul, wobei der typische Aufwand für eine parallele und eine serielle Anbindung verglichen wird.

Wie in Fig. 1a dargestellt, wird eine physikalische Größe 101 eines Prozesses 100 ermittelt. Dazu wird in einer prozessnahen Einheit 110 mittels eines Sensors 111 zunächst eine Messung einer typischerweise analogen Größe vorgenommen. Diese elektrisch auswertbare Meßgröße wird mittels eines A/D-Wandlers 112 in eine digital verarbeitbare Größe umgewandelt und von einer Verarbeitungseinheit 113 zu einem digitalen Applikationswert verarbeitet. Bei paralleler Verdrahtung erfolgt nun zum Zweck der Datenübertragung zu einem E/A-Modul 120 wiederum eine Umwandlung des digitalen Applikationswertes in ein Norm-Signal mittels eines D/A-Wandlers 114. Dieses Norm-Signal wird nun mittels einer Verkabelung 130, beispielsweise über Klemmstellen, Unterverteiler, etc., zum E/A-Modul 120 übertragen, wobei an die Verkabelung für die Übertragung sicherheitsgerichteter Signale typischerweise spezielle Anforderungen zu stellen sind. In dem E/A-Modul 120 erfolgt mittels A/D-Wandler 121 eine Rückumwandlung des übertragenen Signals in den digitalen Applikationswert, welcher mittels Verarbeitungseinheit 122 verarbeitet und erforderlichenfalls zur Weiterleitung an weiterführende Systeme mittels Wandler 123 zum Beispiel in ein Netzwerkprotokoll umgesetzt wird.

Die Erfindung vereinfacht den Signalweg aus Sicht der Sicherheitstechnik derart, dass die Aufwände in den Geräten, der Sensorik bzw. Aktuatorik und der Verkabelung minimiert werden können. Zu diesem Zweck sieht die Erfindung, wie in Fig. 1b dargestellt, vorteilhaft eine direkte serielle Verbindung 140 zwischen den Verarbeitungseinheiten 113 und 122 des Sensor-Moduls 110' bzw. des E/A-Moduls 120' vor.

In nicht sicherheitsrelevanten Systemen sind aus dem Stand der Technik serielle Bussysteme zur Ansteuerung von Sensoren und Aktoren zwar bereits teilweise bekannt, in der Sicherheitstechnik kommen jedoch Anforderungen hinzu, welche durch den Stand der Technik nicht erfüllt werden.

Eine Möglichkeit zur Einhaltung von Sicherheitsvorgaben bestünde darin, in den Sensoren oder Aktuatoren redundante Auswerteeinheiten vorzusehen. Um Hardwarekosten zu minimieren ist in einem erfindungsgemäßen System hingegen vorteilhaft eine verteilte Redundanz der Auswerteeinheiten vorgesehen, indem jeweils eine Auswerteeinheit in korrespondierenden Teilnehmern angeordnet ist.

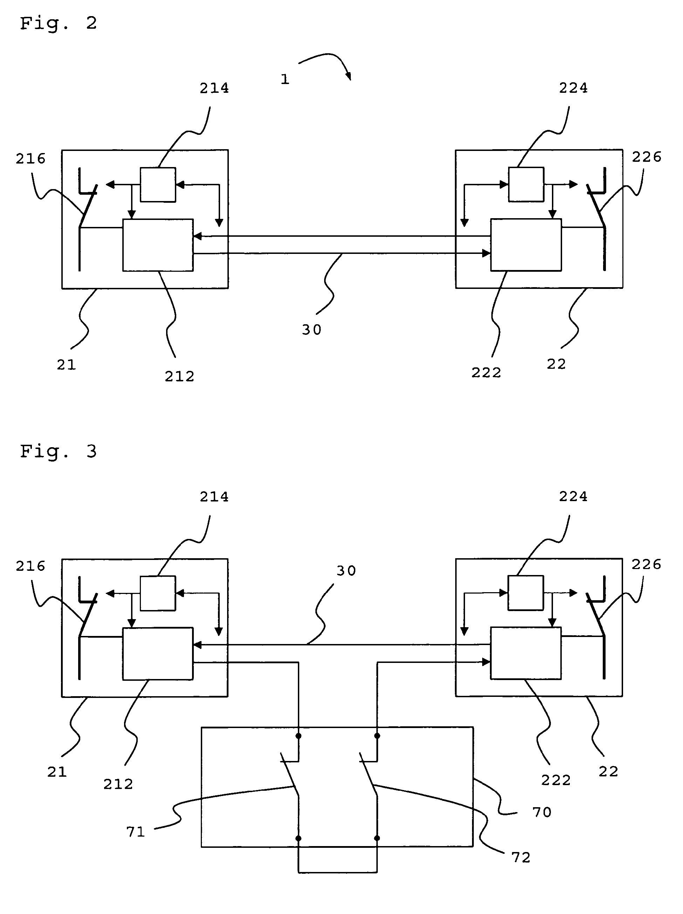

In Fig. 2 ist ein beispielhaftes serielles Kommunikationssystem 1 dargestellt, welches für den Einsatz der Erfindung geeignet ist und die zwei Teilnehmer 21 und 22 umfasst, zwischen denen über das Bussystem 30 eine serielle sichere Verbindung besteht. Die Busteilnehmer 21 und 22 beinhalten jeweils eine Auswerteeinheit 212 bzw. 222, die je einen Teil eines korrespondierenden Paares von Auswerteeinheiten bilden zur erreichung einer verteilten Redundanz. Die Teilnehmer 21 und 22 beinhalten ferner jeweils eine Überwachungsschaltung 214 bzw. 224, welche den Datenstrom überwacht, sowie eine Schnittstelle zu einer sicherheitsrelevanten Applikation 216 bzw. 226, die in Fig. 2 symbolisch als Schalter dargestellt ist. Die sicherheitsrelevante Applikation umfasst typischerweise ein ausführbares, in einem Speicher abgelegtes Programm, welches geeignet ist, Einfluss auf möglicherweise gefahrbringende Prozesse eines Automatisierungssystems zu nehmen.

Die Auswerteeinheiten 212 und 222 kommunizieren über das sichere Protokoll miteinander und kontrollieren die versandten Daten inhaltlich. Durch eine Quittierung der Daten wird die Sicherheit redundant zur Verfügung gestellt. Die an die jeweilige Auswerteeinheit angeschaltete Überwachungsschaltung 214 bzw. 224 prüft den Datenstrom mittels Mustererkennung auf Gültigkeit und setzt im Fehlerfall die Auswerteeinheit 212 bzw. 222 in den sicheren Zustand.

Wie in Fig. 3 dargestellt, ermöglicht die Erfindung auch die Anbindung einfacher mechanischer Steuer- und Sensorelemente. Dargestellt sind wiederum die Teilnehmer 21 und 22, die über das serielle Bussystem 30 miteinander verbunden sind. In diesem Ausführungsbeispiel sind die Busteilnehmer 21 und 22 derart mit dem mechanischen NOT-Aus-Taster 70 verschaltet, dass der Signalweg vom Ausgang der Auswerteeinheit 212 zum Eingang der Auswerteeinheit 222 durch den NOT-Aus-Taster 70 verläuft und die integrierten, redundanten Schalter 71 und 72 passiert. Der NOT-Aus-Taster 70 ist so ausgebildet, dass bei manueller Betätigung beide Schalter 71 und 72 gleichzeitig bedient werden. Durch den Datenaustausch zwischen den verteilten Auswerteeinheiten 212 und 222 wird ein Betätigen des NOT-Aus-Tasters sicher erkannt. Über entsprechende Schaltungen können neben den dargestellten Öffnern (Not-Aus-Taster) auch Schließer und Schließer-/Öffner-Kombinationen Verwendung finden. Diese sind auch mit separater Test-Signal-Einspeisung oder gemeinsamer Test-Signal-Einspeisung verwendbar.

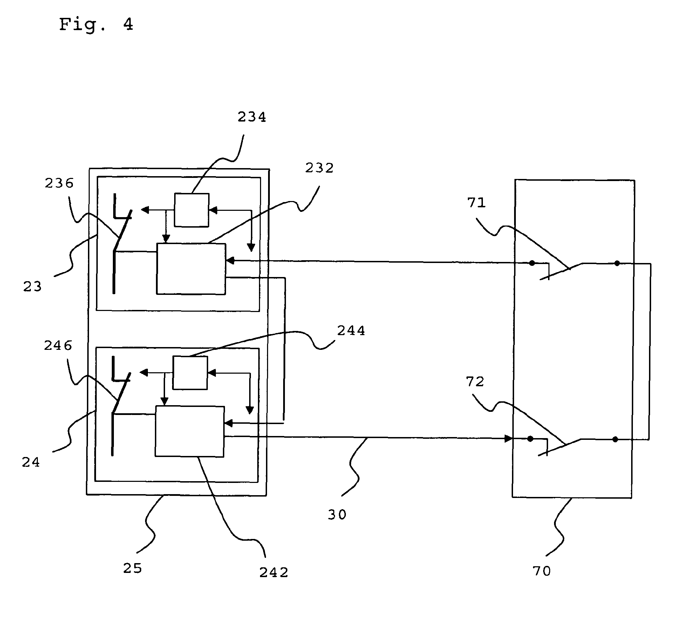

In Fig. 4 ist eine bevorzugte Abwandlung der in Fig. 3 dargestellten Ausführungsform gezeigt, bei der die Teilnehmer 23 und 24, die im wesentlichen den Teilnehmner 21 und 22 entsprechen, in einer gemeinsamen Baugruppe 25 angeordnet sind, welche mit dem NOT-Aus-Taster 70 verbunden wird. Die Teilnehmer 23 und 24 umfassen wiederum Auswerteeinheiten 232 bzw. 242, sowie zugeordnete Überwachungsschaltungen 234 bzw. 244, sowie Schnittstellen zu sicherheitsrelevanten Applikationen 236 bzw. 246. In diesem Ausführungsbeispiel verläuft der Signalweg vom Ausgang der Auswerteeinheit 242 zum Eingang der Auswerteeinheit 232 durch die Schalter 71 und 72 des NOT-Aus-Tasters 70, wobei der entsprechende Ausgang der Auswerteeinheit 232 mit dem entsprechenden Eingang der Auswerteeinheit 242b verbunden ist.

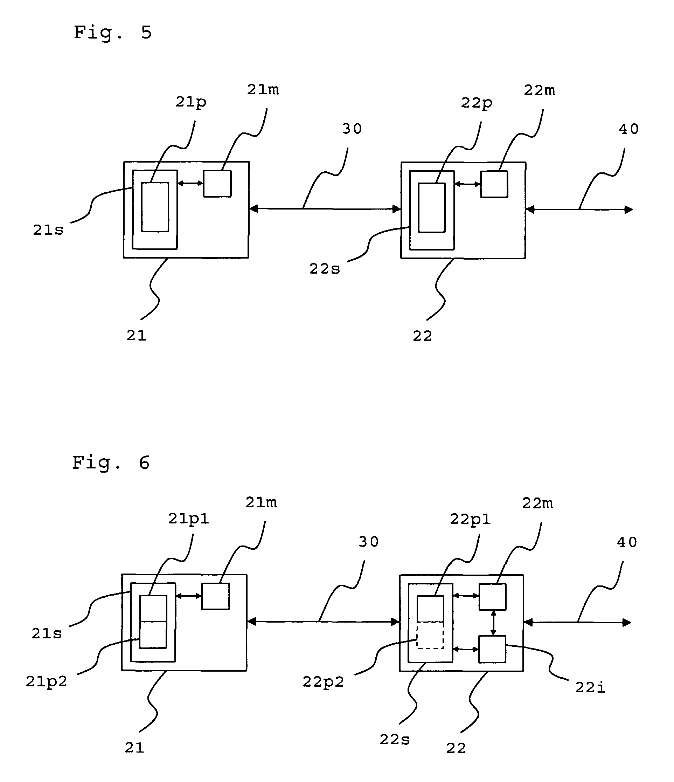

Fig. 5 zeigt eine schematische Darstellung der funktionalen Komponenten des in Fig. 2 dargestellten ersten und zweiten Teilnehmers 21 und 22. Zum Ausführen einer sicherheitsrelevanten Applikation ist in jedem der Teilnehmer 21 und 22 ein Speicher 21s bzw. 22s vorgesehen, in dem jeweils ein ausführbarer Ablaufcode 21p bzw. 22p abgelegt ist. Zur Ausführung der Applikation ist jeweils ein Mikroprozessor 21m bzw. 22m in den Teilnehmern 21 und 22 vorgesehen, der Zugriff auf den jeweiligen Speicher besitzt.

In den dargestellten Ausführungsbeispiel ist der Teilnehmer 21 als Sensor und der Teilnehmer 22 als E/A-Modul ausgebildet, die über das serielle Bussystem 30 miteinander kommunizieren. Das als Eingangskomponente wirkende E/A-Modul 22 ist zusätzlich an ein übergeordnetes Kommunikationssystem 40 angeschlossen, welches beispielsweise die Kommunikation mit einem übergeordneten Steuergerät ermöglicht.

Die Applikationen 21p und 22p sind im dargestellten Ausführungsbeispiel im wesentlichen identisch, um von den in Fig. 2 dargestellten korrespondierenden Auswerteeinheiten 212 bzw. 222 ausgeführt zu werden.

Fig. 6 zeigt eine bevorzugte Ausführungsvariante der funktionalen Komponenten des in Fig. 2 dargestellten ersten und zweiten Teilnehmers 21 und 22, wobei wiederum der Teilnehmer 21 als Sensor und der Teilnehmer 22 als korrespondierendes E/A-Modul ausgebildet sind. In dieser Ausführungsvariante verfügt der Teilnehmer 21 über ein in dem Speicher 21s hinterlegte Sicherheitsapplikation, umfassend die Applikationsteile 21pl und 21p2, welche im korrespondierenden Teilnehmer 22 zunächst teilweise oder vollständig nicht zur Verfügung stehen.

Im dargestellten Ausführungsbeispiel verfügt der Teilnehmer 22 über ein in seinem Speicher 22s hinterlegten Grundfunktionalität 22p1, welche dem Applikationsteil 21pl entspricht. In der Anlaufphase des Systems fordert der Teilnehmer 22 den fehlenden Applikationsteil 21pl des Teilnehmers 21 an, der diesen daraufhin zum Teilnehmer 22 überträgt. Der Teilnehmer 22 speichert den empfangenen Applikationsteil 22p2 in Speicher 22s. Um ein hohes Maß an Flexibilität zu gewährleisten, ist in diesem Ausführungsbeispiel im Teilnehmer 22 ferner ein Interpreter 22i vorgesehen, welcher Zugriff auf den Speicher 22s hat und mit dem Mikroprozessor 22m verbunden ist. Der Interpreter 22i ist dazu ausgebildet, zumindest den zusätzlich zur Verfügung gestellten Ablaufcode 22p2 zu interpretieren und somit ein Ausführen durch den Mikroprozessor 22m zu ermöglichen.

Der zusätzliche Applikationsteil 22p2 kann dem Teilnehmer 22 alternativ auch von einer zentralen Steuereinheit basierend auf einer Projektierung eines Automatisierungssystems über das übergeordnete Kommunikationssystem 40 übermittelt werden. Auch kann die Übermittlung beispielsweise über eine separaten Kommunikationskanal erfolgen.

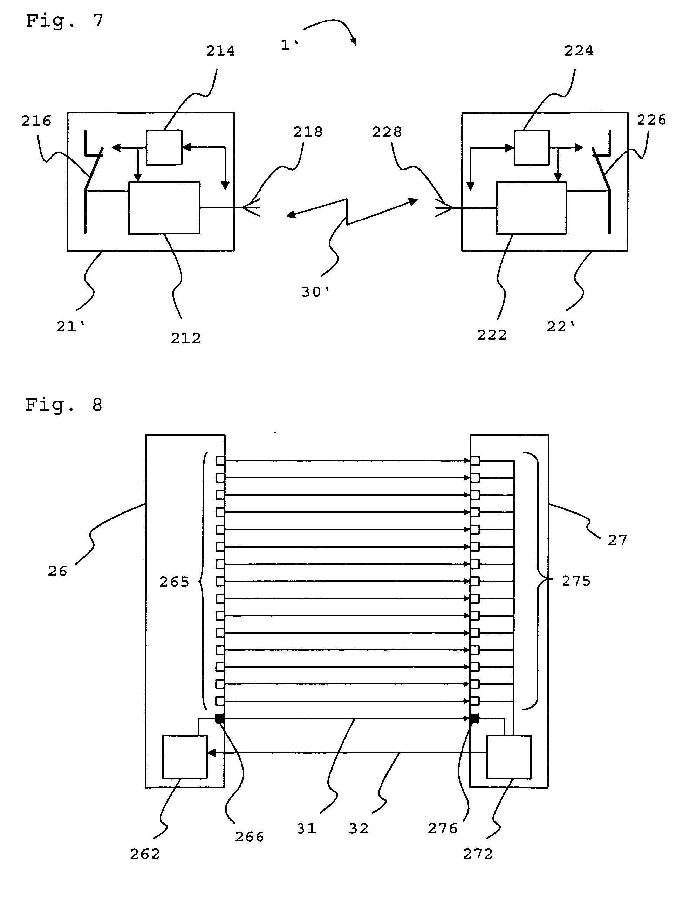

Fig. 7 zeigt ein Kommunikationssystem 1' mit den Teilnehmern 21' und 22', welche in Abwandlung der in Fig. 2 dargestellten Teilnehmer 21 und 22 über eine drahtlose serielle Schnittstelle 30' kommunizieren. Zu diesem Zweck weisen die Teilnehmer 21' und 22' entsprechende Transceiver 218 bzw. 228 auf, mittels derer eine sichere serielle Kommunikation zwischen den Teilnehmern 21' und 22' drahtlos ermöglichen. Im übrigen entspricht der Aufbau der Teilnehmer 21' und 22' dem der in Fig. 2 dargestellten Teilnehmer 21 und 22.

In Fig. 8 ist eine weitere Ausführungsform der Erfindung dargestellt. Vorgesehen ist ein Lichtgitter mit einem Sender 26 und einem Empfänger 27. Der Sender 26 umfasst eine Vielzahl von Lichtquellen 265, eine Auswerteeinheit 262 sowie eine separat ansteuerbare Lichtquelle 266. Der Empfänger 27 umfasst eine Vielzahl von Lichtsensoren 275, eine Auswerteeinheit 272, sowie einen separat auslesbaren Lichtsensor 276. Der Sender 26 und der Empfänger 27 bilden einen ersten und zweiten Teilnehmer eines seriellen Kommunikationssystems. Der serielle Datenaustausch zwischen der Auswerteeinheit 262 und der Auswerteeinheit 272 erfolgt in diesem Ausführungsbeispiel mittels eines durch die Lichtquelle 266 und den Lichtsensor 276 gebildeten optischen Datenübertragungskanal und einen elektrischen Rückkanal 32.

## Patentansprüche

**1.** Verfahren zur sicheren Datenübertragung zwischen wenigstens einem ersten (21, 21', 23, 26) und einem zweiten (22, 22', 24, 27) Teilnehmer eines Kommunikationssystems (1, 1'), das zur seriellen Datenübertragung zwischen den Teilnehmern (21, 22, 21', 22', 23, 24, 26, 27) ausgebildet ist, wobei der erste Teilnehmer eine erste Auswerteeinheit (212, 232, 262) und der zweite Teilnehmer eine zweite Auswerteeinheit (222, 242, 272) umfasst, mit den Schritten
- Übertragen einer Datennachricht von dem ersten Teilnehmer (21, 21', 23, 26) zu dem zweiten Teilnehmer (22, 22', 24, 27),
- Überprüfen der Datennachricht durch die zweite, in dem zweiten Teilnehmer angeordnete Auswerteeinheit,
- Übertragen einer Quittungsnachricht von dem zweiten Teilnehmer zu dem ersten Teilnehmer in Abhängigkeit des Ergebnisses der Überprüfung der Datennachricht, und
- Überprüfen der Quittungsnachricht durch die erste, in dem ersten Teilnehmer angeordnete Auswerteeinheit.

**2.** Verfahren nach vorstehendem Anspruch, wobei zwischen den ersten und den zweiten Teilnehmer ein Steuer- oder Sensorelement (70) geschaltet ist, das keine Auswerteeinheit umfasst.

**3.** Verfahren nach Anspruch 2, wobei das Steuer- oder Sensorelement (70) als mechanisches Element ausgebildet ist.

**4.** Verfahren nach einem der vorstehenden Ansprüche, wobei das Überprüfen einer Datennachricht durch eine Auswerteeinheit, das Überprüfen einer Quittungsnachricht durch eine Auswerteeinheit, das Überwachen des Datenstroms durch eine Überwachungsschaltung und/oder das Überwachen der Funktionsfähigkeit einer Auswerteeinheit durch eine Überwachungsschaltung durch Ausführen einer in dem ausführenden Teilnehmer (22) hinterlegten Funktion (22p1, 22p2) erfolgt, und wobei vor Ausführen der Funktion Teile (22p2) der auszuführenden Funktion und/oder Parameter zum Ausführen der Funktion von einem weiteren Teilnehmer (21) zu dem ausführenden Teilnehmer (22) übertragen werden.

**5.** Verfahren nach einem der vorstehenden Ansprüche, wobei die serielle Datenübertragung zwischen den Teilnehmern (21, 22, 21', 22', 23, 24, 26, 27) mittels eines Datenübertragungsprotokolls erfolgt,
und/oder
wobei die serielle Datenübertragung zwischen den Teilnehmern über einen kabelgebunden (30) oder drahtlos (30') ausgebildeten seriellen Bus erfolgt,
und/oder
wobei der erste und/oder der zweite Teilnehmer als Sensor oder Aktuator eines Automatisierungssystems ausgebildet ist,
und/oder
wobei die Datennachricht ein Ein- oder Ausgangssignal eines Sensors bzw. Aktors umfasst,
und/oder
wobei das Überprüfen der Datennachricht und/oder der Quittungsnachricht ein Überprüfen der in der Nachricht enthaltenen Daten auf Plausibilität umfasst,
und/oder
wobei das Überprüfen der Quittungsnachricht ein Vergleichen von in der Quittungsnachricht enthaltenen Daten mit in der Datennachricht enthaltenen Daten umfasst,
und/oder
wobei die Quittungsnachricht eine weitere gültige Datennachricht umfasst,
und/oder
wobei das den ersten und zweiten Teilnehmer umfassende Kommunikationssystem (1, 1') als Master/Slave-System ausgebildet ist, wobei der erste oder zweite Teilnehmer als Master ausgebildet ist,
und/oder
wobei der erste oder zweite Teilnehmer an ein übergeordnetes Bussystem (40) angeschlossen ist.

**6.** Verfahren nach einem der vorstehenden Ansprüche, wobei jeder Auswerteeinheit (212, 222, 232, 242) eine Überwachungsschaltung (214, 224, 234, 244) zugeordnet ist, die den Datenstrom zu und/oder von der zugeordneten Auswerteeinheit (212, 222, 232, 242) gemäß einem vorgegebenen Protokoll auf Gültigkeit überwacht und im Fehlerfall die zugeordnete Auswerteeinheit (212, 222, 232, 242) und/oder einen durch die zugeordnete Auswerteeinheit gesteuerten Sensor oder Aktor in einen sicheren Zustand setzt,
wobei ein Überwachen des Datenstroms durch die Überwachungsschaltung (214, 224, 234, 244) insbesondere das Erkennen eines vorgegebenen Musters umfasst,
und/oder
wobei die Überwachungsschaltung (214, 224, 234, 244) insbesondere die Funktionsfähigkeit der zugeordneten Auswerteeinheit (212, 222, 232, 242) überwacht.

**7.** System zur Übertragung sicherheitsgerichteter Daten zur Steuerung eines Automatisierungssystems, insbesondere ausgebildet zur Ausführung eines Verfahrens nach einem der vorstehenden Ansprüche, umfassend
- ein serielles Kommunikationssystem (1) mit wenigstens einem ersten und einem zweiten daran angeschlossenen Teilnehmer (21, 22, 21', 22', 23, 24, 26, 27),
- wenigstens eine erste, in dem ersten Teilnehmer (21, 21', 23, 26) angeordnete Auswerteeinheit (212 , 232, 262), und
- wenigstens eine zweite, in dem zweiten Teilnehmer (22, 22', 24, 27) angeordnete Auswerteeinheit (222, 242, 272), wobei
die zweite Auswerteeinheit zum Überprüfen einer von dem ersten Teilnehmer empfangenen Datennachricht und zum Generieren einer Quittungsnachricht in Abhängigkeit des Ergebnisses der Überprüfung der Datennachricht ausgebildet ist,
die erste Auswerteeinheit zum Überprüfen einer von dem zweiten Teilnehmer empfangenen Quittungsnachricht ausgebildet ist, und
der erste und/oder der zweite Teilnehmer dazu ausgebildet sind, im Fehlerfall eine Sicherheitsfunktion auszuführen.

**8.** System nach vorstehendem Anspruch 7, wobei zwischen den ersten und den zweiten Teilnehmer ein Steuer- oder Sensorelement (70) geschaltet ist, das keine Auswerteeinheit umfasst.

**9.** System nach Anspruch 8, wobei das Steuer- oder Sensorelement (70) als mechanisches Element ausgebildet ist.

**10.** System nach einem der vorstehenden Ansprüche 7 bis 9, wobei der erste (23) und der zweite (24) Teilnehmer in einer gemeinsamen Baugruppe (25) angeordnet sind.

**11.** System nach einem der vorstehenden Anspruche 7 bis 9, wobei wenigstens ein Teilnehmer dazu ausgebildet ist, das Überprüfen einer Datennachricht durch eine Auswerteeinheit, das Überprüfen einer Quittungsnachricht durch eine Auswerteeinheit, das Überwachen des Datenstroms durch eine Überwachungsschaltung und/oder das Überwachen der Funktionsfähigkeit einer Auswerteeinheit durch eine Überwachungsschaltung durch Ausführen einer in dem Teilnehmer (22) hinterlegten Funktion (22p1, 22p2) durchzuführen, wobei der wenigstens eine Teilnehmer (22) ferner dazu ausgebildet ist, zum Ausführen der Funktion ausführbare Funktionsteile (22p2) und/oder Parameter von einem weiteren Teilnehmer (21) anzufordern.

**12.** System nach einem der vorstehenden Ansprüche 7 bis 10, wobei das Datenübertragungsprotokoll des Kommunikationssystems (1) als sicheres Kommunikationsprotokoll ausgebildet ist,
und/oder
wobei das Kommunikationssystem (1, 1') zur seriellen Datenübertragung zwischen den Teilnehmern einen kabelgebundenen (30) oder drahtlosen (30') seriellen Bus umfasst,
und/oder
wobei der erste und/oder zweite Teilnehmer als Sensor oder Aktuator des Automatisierungssystems ausgebildet ist, und/oder
wobei die erste und/oder zweite Auswerteeinheit zum Überprüfen von in einer Datennachricht oder einer Quittungsnachricht enthaltenen Daten auf Plausibilität ausgebildet ist,
und/oder
wobei die erste und/oder zweite Auswerteeinheit zum Vergleichen von in einer Datennachricht enthaltenen Daten mit in einer Quittungsnachricht enthaltenen Daten ausgebildet ist,
und/oder
wobei wenigstens die zweite Auswerteeinheit zum Generieren einer Quittungsnachricht ausgebildet ist, welche eine weitere gültige Datennachricht umfasst.

**13.** System nach einem der vorstehenden Ansprüche 7 bis 12, wobei jeder Auswerteeinheit (212, 222, 232, 242) eine Überwachungsschaltung (214, 224, 234, 244) zugeordnet ist, die dazu ausgebildet ist, den Datenstrom zu und/oder von der zugeordneten Auswerteeinheit (212, 222, 232, 242) gemäß einem vorgegebenen Protokoll auf Gültigkeit zu überwachen und im Fehlerfall die zugeordnete Auswerteeinheit (212, 222, 232, 242) und/oder einen durch die zugeordnete Auswerteeinheit gesteuerten Sensor oder Aktor in einen sicheren Zustand zu setzen, wobei.

**13.** System nach Anspruch 13 wobei die Überwachungsschaltung (214, 224, 234, 244) zum Erkennen eines vorgegebenen Musters ausgebildet ist.

**14.** System nach Anspruch 13 oder 14, wobei die Überwachungsschaltung (214, 224, 234, 244) dazu ausgebildet ist, die Funktionsfähigkeit der zugeordneten Auswerteeinheit (212, 222, 232, 242) mittels einer Funktion zu überwachen.

**15.** System nach einem der vorstehenden Ansprüche 7 bis 14, wobei das den ersten und zweiten Teilnehmer umfassende Kommunikationssystem (1, 1') als Master/Slave-System ausgebildet ist, wobei der erste oder zweite Teilnehmer als Master ausgebildet ist,
und/oder
wobei der erste oder zweite Teilnehmer an ein weiteres, übergeordnetes Kommunikationssystem (40) angeschlossen ist.
